# EUROPÄISCHE PATENTANMELDUNG

(11) **EP 1 193 025 A2**
(43) Veröffentlichungstag der Anmeldung: **03.04.2002**
(21) Anmeldenummer: 01121206.5
(22) Anmeldetag: 05.09.2001
(51) Int. Cl.: B23Q 3/154

(54) **Halterungsvorrichtung insbesondere zum Fixieren und/oder Lösen von Anbauteilen**

(30) Priorität: 06.09.2000 DE 20015391 U
(71) Anmelder: MV Marketing + Vertriebs-GmbH & Co. KG Wieländer + Schill, 78054 Villingen-Schwenningen (DE)
(72) Erfinder: Harwarth-Seyfried, Wolfgang, 78056 Villingen-Schwenningen (DE)
(74) Vertreter: Blumbach, Kramer & Partner GbR

(57) **Zusammenfassung**

Um bei einer Halterungsvorrichtung insbesondere zum Fixieren und/oder Lösen von Einbauteilen im Bereich der Fahrzeugherstellung und/oder -instandsetzung auf einfache Art eine große Anzahl unterschiedlicher Einzelteile und/oder Anbauteile insbesondere zum Fixieren oder Lösen halten zu können, ist ein Magnetisierungskörper (1, 1a, 1b, 1c) mit einer daran angeordneten Bedienungseinrichtung (2) vorgesehen.

## Beschreibung

Die Erfindung betrifft eine Halterungsvorrichtung insbesondere zum Fixieren von Anbauteilen und/oder Schutzvorrichtungen im Bereich der Fahrzeugherstellung und/oder Fahrzeuginstandhaltung.

Auf vielen insbesondere technischen Gebieten, wie beispielsweise im Bereich der Fahrzeugherstellung und/oder der Fahrzeuginstandhaltung bzw. -reparatur müssen einzelne Komponenten miteinander starr oder beweglich verbunden werden.

Im Wesentlichen unabhängig von der Art der gegenseitigen Befestigung, wie beispielsweise über eine Schraub-, Niet-, Löt- oder Schweißverbindung müssen hierbei herkömmlicherweise die miteinander zu verbindenden Komponenten zunächst zum gegenseitigen entsprechendem Ausrichten und Fixieren gehalten werden. Werden andererseits miteinander verbundene Komponenten voneinander gelöst, beispielsweise um eine beschädigte Komponente durch eine neuwertige auszutauschen, so muss in vielen Fällen zumindest eine der beiden Komponenten anschließend gehalten werden.

Ohne Begrenzung der Allgemeingültigkeit sei hier beispielhaft auf den Einbau einer Kraftfahrzeugtür bzw. den Austausch einer Fahrzeugtür gegen eine andere verwiesen.

Das Halten beim Fixieren und/oder Lösen einzelner Komponenten bzw. Anbauteile wird hierbei herkömmlicherweise manuell oder auch durch Einsatz von Greifwerkzeugen durchgeführt. Ein manuelles Halten ist in vielen Fällen jedoch nur bedingt möglich bzw. insbesondere von der Form und/oder der Größe einer derartigen Komponente abhängig. Ferner kann ein Umgreifen derartiger Komponenten wie beispielsweise der vorgenannten Fahrzeugtür zu Verletzungen insbesondere aufgrund scharfkantiger Ränder und/oder von Quetschungen im Scharnierbereich, an welchem die Tür mit der Karosserie zu verbinden bzw. zu lösen ist, führen.

Bei Greifwerkzeugen, im Wesentlichen unabhängig davon, ob diese manuell oder maschinell bedient werden, ist für das Greifen selbst üblicherweise eine ausreichende Zugänglichkeit zur zu befestigenden bzw. fixierenden oder lösenden Komponente erforderlich. Insbesondere im Bereich der Fahrzeug- und/oder Karosserietechnik aber auch in anderen Bereichen, bei denen eine optimale Ausnutzung des zur Verfügung stehenden Platzes bzw. Raumes insbesondere aus wirtschaftlichen Gründen angestrebt wird, hat dies in der Regel nachteilige Auswirkungen in Bezug auf die Zugänglichkeit.

Ähnliche Probleme zeigen sich jedoch auch beim beispielsweise nur zeitweisen Fixieren von Schutzvorrichtungen, insbesondere für den Fall, dass an einem Bereich einer Vorrichtung gearbeitet werden muss und benachbarte Bereiche vor Beschädigung in Folge dieser Arbeiten geschützt werden müssen. Als Beispiel sei hierfür wieder auf den Kraftfahrzeugbereich für den Fall verwiesen, dass an einem Karosserieteil Schweißarbeiten durchgeführt werden müssen, wobei das übrige Fahrzeug, insbesondere vor dem Funkensprühen geschützt werden muss.

Ein manuelles Halten von Schutzvorrichtungen ist in einem solchen Fall im Wesentlichen ausgeschlossen. Darüber hinaus ist ein Befestigen einer hierfür geeigneten Schutzvorrichtung oft nur unter großem Aufwand möglich oder ebenfalls ausgeschlossen, so dass das zu bearbeitende Fahrzeugteil erst vom übrigen Fahrzeug gelöst und nach Durchführen der Arbeiten wieder montiert werden muss.

Aufgabe der Erfindung ist es somit, einen Weg aufzuzeigen, durch welchen auf einfachste Art eine große Anzahl unterschiedlicher Einzelteile und/oder Anbauteile insbesondere zum Fixieren oder Lösen gehalten werden kann.

Die erfindungsgemäße Lösung der Aufgabe ist auf höchst überraschende Weise bereits durch eine Halterungsvorrichtung mit den Merkmalen des Anspruchs 1 gekennzeichnet.

Vorteilhafte und/oder bevorzugte Ausführungsformen bzw. Weiterbildungen sind Gegenstand der Unteransprüche.

Erfindungsgemäß ist somit eine Halterungsvorrichtung zum Fixieren und/oder Lösen von insbesondere Anbauteilen im Bereich der Fahrzeugherstellung und/oder -instandsetzung vorgesehen, welche einen Magnetisierungskörper mit einer daran angeordneten Bedienungseinrichtung umfasst.

Von Vorteil hierbei ist insbesondere, dass bei im Wesentlichen allen zu fixierenden und/oder zu lösenden Anbauteilen, die ein magnetisierbares Material umfassen, im Wesentlichen unabhängig von der Form und/oder Größe mittels des Magnetisierungskörpers oberflächig gehalten werden können und ein Umgreifen zum Halten nicht mehr erforderlich ist. Ferner ist es möglich, insbesondere dünnwandige Komponenten, wie beispielsweise Schutzvorrichtungen mittels der erfindungsgemäßen Halterungsvorrichtung zwischen dem Magnetisierungskörper und einer magnetisierbaren Gegenfläche im vorzugsweisen unmittelbar benachbarten Bereich eines zu bearbeitenden Teils zu halten.

Darüber hinaus gewährleistet die an dem Magnetisierungskörper angeordnete Bedienungseinrichtung ein einfaches und leichtes Halten einer an dem Magnetisierungskörper insbesondere zum Fixieren und/oder Lösen haftenden Komponente.

In praktischer Ausgestaltung ist vorgesehen, die Bedienungseinrichtung als einfachen Handgriff auszubilden, so dass ein Benutzer der erfindungsgemäßen Halterungsvorrichtung diese auf einfachste Weise flexibel einsetzen kann.

Zur weiteren Vereinfachung von insbesondere einer Vielzahl aufeinanderfolgender Arbeitsschritte ist darüber hinaus zweckmäßigerweise vorgesehen, die Bedienungseinrichtung lösbar mit dem Magnetisierungskörper zu verbinden, so dass nach einmaligen Anhaften des Magnetisierungskörpers an einer zu fixierenden und/oder zu lösenden Komponente dieser in vielen Fällen nicht mehr für Zwischenarbeitsschritte gelöst werden muss, da es häufig bereits ausreichend ist, die an dem Magnetisierungskörper angeordnete Bedienungseinrichtung von diesem zu lösen. Hierdurch ist beispielsweise gewährleistet, dass mit einer Bedienungseinrichtung verschiedene Magnetisierungskörper gesetzt werden können und bei Bedarf die Bedienungseinrichtung wieder lösbar an ausgewählten angeordnet werden kann. Andererseits kann die am Magnetisierungskörper lösbar angeordnete Bedienungseinrichtung einfach entfernt werden, um beispielsweise ansonsten nicht durchführbare Zwischenarbeitsgänge durchzuführen.

In besonders bevorzugter Weise ist die Halterungsvorrichtung ferner mit einer weiteren Aufnahmeeinrichtung zum Aufnehmen zugeordneter Fixiermittel ausgebildet, wobei eine solche Aufnahmeeinrichtung zweckmäßigerweise zwischen der Bedienungseinrichtung und dem Magnetisierungskörper angeordnet ist. Hierdurch läßt sich beispielsweise ein als Abstandshalter ausgebildetes Fixiermittel mit einer daran anordenbaren weiteren Komponente über die erfindungsgemäße Halterungsvorrichtung zusätzlich aufnehmen.

Um die Halteeigenschaften der erfindungsgemäßen Halterungsvorrichtung weiter zu verbessern, sieht die Erfindung ferner zur Weiterbildung vor, dass der Magnetisierungskörper eine Vielzahl von einzelnen Magnetelementen umfasst, die je nach Anwendungsgebiet vorzugsweise flächig nebeneinander angeordnet sind oder durch Isoliereinrichtungen jeweils voneinander getrennt geschichtet angeordnet sind, um die erreichbaren magnetischen Flussdichten zu verbessern.

In bevorzugter Weiterbildung ist ferner vorgesehen, die Halterungsvorrichtung mit einer Einrichtung zum Ändern der Polarität auszubilden, so dass über eine entsprechende Richtungsumkehr der Polarität ein Ein- bzw. Ausschalten des Magnetisierungskörpers ermöglicht ist und in besonders zweckmäßiger Ausführung eine insbesondere stufenlos einstellbare Magnetisierung des Magnetisierungskörpers der Halterungsvorrichtung durchführbar ist.

Um eine Beschädigung der magnetisierbaren Komponenten, welche mit der Halterungsvorrichtung gehalten werden soll, im Wesentlichen vollständig auszuschließen ist darüber hinaus vorgesehen, dass der Magnetisierungskörper von einer Schutzhülle, zweckmäßigerweise aus einem gummihaltigen Material, überzogen ist.

Die Erfindung wird nachfolgend am Beispiel dreier bevorzugter Ausführungsformen unter Bezugnahme auf die beigefügten Zeichnungen im Einzelnen beschrieben.

Es zeigen:
- Fig. 1: eine erste erfindungsgemäße Ausführungsform der Halterungsvorrichtung,
- Fig. 2: eine zweite erfindungsgemäße Ausführungsform der Halterungsvorrichtung mit einer zusätzlichen Aufnahmeeinrichtung,
- Fig. 3: eine Aufsicht auf die Ausführungsform gemäß Fig. 1,
- Fig. 4: eine teilweise geschnittene Ansicht von unten einer der Ausführungsform von Fig. 1 ähnlichen Ausführungsform, jedoch mit einer Vielzahl von Magnetelementen,
- Fig. 5: eine Seitenansicht einer dritten erfindungsgemäßen Ausführungsform, und
- Fig. 6: eine Aufsicht auf eine der Ausführungsform von Fig. 5 ähnlichen Ausführungsform.

Für die nachfolgende Beschreibung sei vorab darauf hingewiesen, dass gleiche oder gleichwirkende Teile in den Fig. mit den selben Bezugszeichen versehen sind.

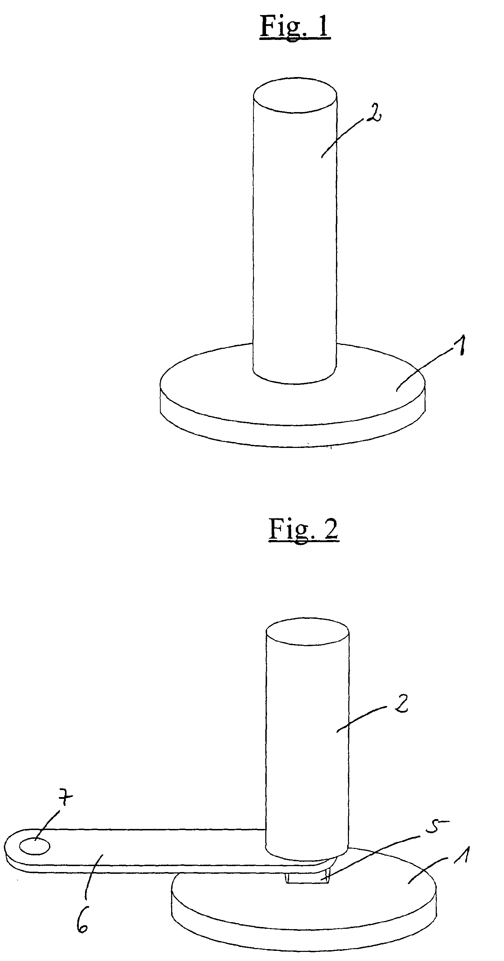

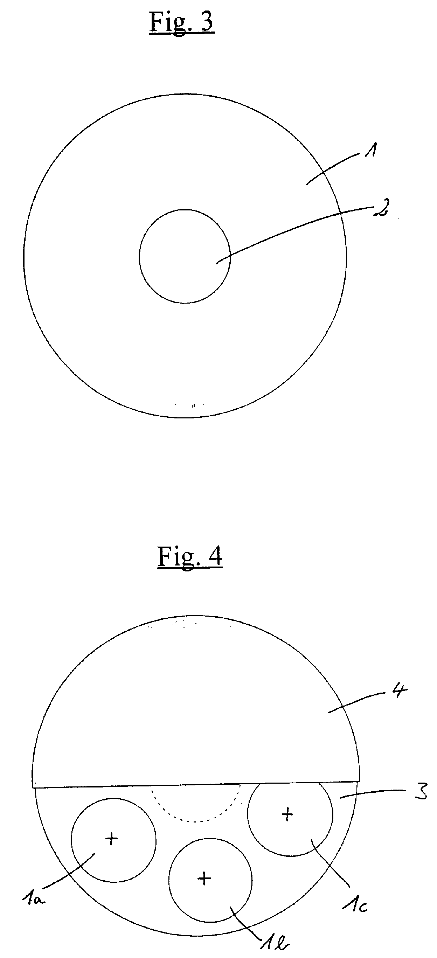

Nachfolgend wird auf die Fig. 1 in Verbindung mit der Fig. 3 Bezug genommen, welche eine erste Ausführungsform der erfindungsgemäßen Halterungsvorrichtung beispielhaft darstellen.

Die Halterungsvorrichtung gemäß Fig. 1 umfasst als Magnetisierungskörper 1 einen Magneten, an welchem ein Handgriff 2 angeordnet ist. In praktischer Ausführung ist der Haltegriff 2 zweckmäßigerweise mit einem Kunststoffüberzug versehen, der die Griff-Festigkeit für den Benutzer erhöht und ist durch dem Fachmann an sich bekannte Befestigungsverfahren, wie beispielsweise durch Verkleben oder Verschweißen mit dem Magneten 1 verbunden. Wie insbesondere aus der Fig. 3 zu erkennen ist, gewährleistet eine solche Ausführungsform eine großflächige Anlagefläche für den Magneten 1 an einer zu haltenden Komponente, wie insbesondere einem zu fixierenden oder zu lösenden Anbauteil.

Ferner ist mittels dieser Ausführungsform ein einfaches "klemmendes" Halten beispielsweise von Schutzvorrichtungen wie Schutzplanen zwischen dem Magneten 1 und einer magnetisierbaren Komponente gewährleistet, beispielsweise einem Karosserieteil in unmittelbarer Nähe auszuführender Arbeiten, so dass benachbarte Bereiche vor Beschädigungen geschützt werden.

Bei einer zu der den Figuren 1 und 3 ähnlichen Ausführungsform gemäß Fig. 4 umfasst der Magehetisierungskörper eine Vielzahl von einzelnen Magnetelementen 1a, 1b, 1c, die in einer Metallscheibe 3 eingelassen sind. Ferner ist diese Anordnung, wie der teilweise geschnittenen Ansicht zu entnehmen ist, von einer Schutzhülle 4, beim vorliegenden Ausführungsbeispiel von einem Gummimaterial überzogen, so dass bei der Halterung magnetisierbarer Komponenten eine Beschädigung im Wesentlichen ausgeschlossen ist.

Ferner erhöht sich durch eine wie bei Fig. 4 dargestellte Anordnung einer Anzahl von einzelnen Magnetelementen 1a, 1b, 1c das magnetische Moment insgesamt gegenüber eines einzelnen scheibenförmig ausgebildeten Magneten 1 wie bei den Figuren 1 und 3.

Es sei jedoch darauf hingewiesen, dass die Erfindung auch Ausführungsformen umfasst, welche, um insbesondere größere magnetische Flussdichten zu erzielen, beispielsweise durch schichtenweises Anordnen von Magnetelementen mit dazwischen liegenden Isoliereinrichtungen, wie insbesondere Isolierplättchen oder -folien ausgebildet sind.

Fig. 2 zeigt eine Ausführungsform, bei der ein Haltegriff 2 lösbar mit dem Magnetisierungskörper 1 verbunden ist. Hierzu ist in praktischer Ausgestaltung vorgesehen, ein an dem Magnetisierungskörper 1 fest angeordnetes Zwischenelement 5 mit einem nicht dargestellten Innengewinde auszubilden, in welches ein an dem Haltegriff 2 angeordneter und mit einem entsprechend komplementär ausgebildeten Aussengewinde versehener Bolzen oder Stift einschraubbar ist.

Bei der Ausführungsform gemäß Fig. 2 bildet das Zapfenförmige Zwischenelement 5 ferner eine Aufnahmeeinrichtung für ein zugeordnetes Fixiermittel 6 aus. Der Zapfen 5 weist hierzu eine im Wesentlichen kubische äußere Form auf, auf welches das Fixiermittel 6 mit einer entsprechenden Durchgangsöffnung aufsetzbar ist. Nach Anhaften der Halterungsvorrichtung an eine zu haltende Komponente kann über das Fixiermittel 6 und einer daran angeordneten Durchgangsöffnung 7 eine weitere Komponente wie beispielsweise eine Schutzvorrichtung oder ein weiteres auszurichtendes Anbauteil in einem festgelegten Abstand gehalten werden.

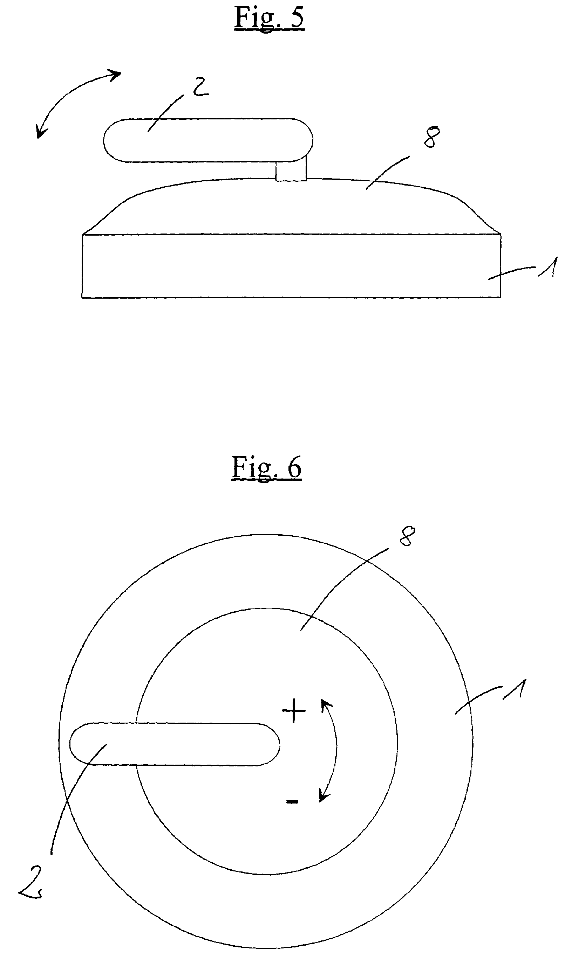

Die Figuren 5 und 6 stellen skizzenhaft zwei weitere Ausführungsformen der erfindungsgemäßen Halterungsvorrichtung dar, bei welchen die magnetische Polarisation des jeweiligen Magnetisierungskörpers 1 änderbar ist. Eine in Fig. 5 skizzenhaft dargestellte Polarisierungseinrichtung 8 bewirkt hierbei, dass durch Aufstellen des Handgriffs 2 ein daran angeordneter Magnetpol dem Magnetisierungskörper 1 angenähert wird, wodurch sich die magnetische Polarisation und das resultierende Magnetfeld des Magnetisierungskörpers 1 zweckmäßigerweise stufenlos einstellen läßt. Durch Absenken des Handgriffs 2 in die bei Fig. 5 dargestellte Position verschwindet die Polarisierung des Magnetisierungskörpers 1 im Wesentlichen vollständig und die Halterungsvorrichtung kann insgesamt von der zu haltenden Komponente gelöst werden.

Bei der in Fig. 6 dargestellten Ausführungsform kann der Magnetisierungskörper 1 durch drehen des Handgriffs 2 in eine der durch den Doppelpfeil dargestellten Richtungen ein- bzw. ausgeschaltet werden. Beim vorliegenden Ausführungsbeispiel bewirkt ein Drehen in Richtung des "+"-Zeichen, dass der Magnetisierungskörper 1 eingeschaltet und ein Drehen des Handgriffs 2 in Richtung des "-"-Zeichen, dass der Magnetisierungskörper 1 ausgeschaltet ist.

Die Erfindung umfasst somit Ausführungsformen, bei denen der Magnetisierungskörper als Dauermagnet, wie beispielsweise bei den Figuren 1 bis 4 ausgebildet ist. Ferner sind unter Bezugnahme auf die Figuren 5 und 6 Ausführungsformen umfasst, bei denen der Magnetisierungskörper auf einem insbesondere ferromagnetischen Element aufgebaut ist, welches eine Polarisierung gewährleistet.

Es sei jedoch darauf hingewiesen, dass von der Erfindung darüber hinaus Ausführungsformen umfasst sind, bei welchen der Magnetisierungskörper beispielsweise als Elektromagnet ausgebildet ist.

## Patentansprüche

1. Halterungsvorrichtung insbesondere zum Fixieren und/oder Lösen von Einbauteilen im Bereich der Fahrzeugherstellung und/oder -instandsetzung, **gekennzeichnet durch** einen Magnetisierungskörper (1, 1a, 1b, 1c) mit einer daran angeordneten Bedienungseinrichtung (2).

2. Halterungsvorrichtung nach Anspruch 1, **dadurch gekennzeichnet, dass** die Bedienungseinrichtung (2) lösbar mit dem Magnetisierungskörper (1, 1a, 1b, 1c) verbunden ist.

3. Halterungsvorrichtung nach Anspruch 1 oder 2, **gekennzeichnet durch** eine Einrichtung (5) zum Aufnehmen wenigstens eines zuordenbaren Fixiermittels (6), wobei die Aufnahmevorrichtung (5) vorzugsweise zwischen der Bedienungseinrichtung (2) und dem Magnetisierungskörper (1, 1a, 1b, 1c) angeordnet ist.

4. Halterungsvorrichtung nach einem der Ansprüche 1 bis 3, **dadurch gekennzeichnet, dass** der Magnetisierungskörper eine Vielzahl von Magnetelementen (1a, 1b, 1c) umfasst.

5. Halterungsvorrichtung nach einem der Ansprüche 1 bis 4, **gekennzeichnet durch** eine Einrichtung (8) zum Ändern der Polarität.

6. Halterungsvorrichtung nach einem der Ansprüche 1 bis 5, **dadurch gekennzeichnet, dass** das Magnetfeld des Magnetisierungskörpers (1, 1a, 1b, 1c) insbesondere stufenlos einstellbar ist.

7. Halterungsvorrichtung nach einem der Ansprüche 1 bis 6, **dadurch gekennzeichnet, dass** der Magnetisierungskörper (1) von einer Schutzhülle (4) im Wesentlichen vollständig umschlossen ist.

8. Halterungsvorrichtung nach Anspruch 7, **dadurch gekennzeichnet, dass** die Schutzhülle (4) gummihaltiges Material umfasst.

9. Halterungsvorrichtung nach einem der Ansprüche 1 bis 8, **dadurch gekennzeichnet, dass** die Bedienungseinrichtung (2) als Handgriff ausgebildet ist.
